# EUROPÄISCHE PATENTSCHRIFT

(11) **EP 4 303 104 B1**
(45) Veröffentlichungstag und Bekanntmachung des Hinweises auf die Patenterteilung: **25.12.2024**
(21) Anmeldenummer: 22183085.4
(22) Anmeldetag: 05.07.2022
(51) Int. Cl.: B62J 1/08, B62J 1/00

(54) **SATTEL FÜR EIN FAHRRAD, FAHRRAD, HERSTELLUNGSVERFAHREN UND MONTAGEVERFAHREN**
SADDLE FOR A BICYCLE, BICYCLE, MANUFACTURING METHOD AND ASSEMBLY METHOD
SELLE POUR UNE BICYCLETTE, BICYCLETTE, PROCÉDÉ DE FABRICATION ET PROCÉDÉ DE MONTAGE

(43) Veröffentlichungstag der Anmeldung: 10.01.2024
(73) Patentinhaber: D&R Holding GmbH, 88267 Vogt (DE)
(72) Erfinder: Krauss, Robert, 82229 Seefeld (DE)
(74) Vertreter: Vossius & Partner Patentanwälte Rechtsanwälte mbB

(56) Entgegenhaltungen:
- EP-B1- 1 982 907
- WO-A1-2006/100564
- US-A1- 2009 261 633
- US-A1- 2021 114 677
- US-A1- 2021 347 427

## Beschreibung

Fahrradfahren ist eine relativ beliebte Sportart und/oder Freizeitaktivität mit einem relativ großen Markt und einem relativ großen Angebot an Fahrrädern und Fahrradkomponenten. Demzufolge werden Fahrräder und Fahrradkomponenten in einer relativ großen Vielfalt angeboten, beispielsweise in verschiedenen Ausführungen, Preisklassen, Qualitätsstufen und/oder mit unterschiedlichen Eigenschaften.

Insbesondere Fahrradsättel leisten einen wesentlichen Beitrag zu den Eigenschaften, beispielsweise zum Benutzererlebnis, eines Fahrrads. Unter anderem spielen Fahrradsättel eine wesentliche Rolle bei der Ästhetik, dem Komfort, der Sicherheit und/oder der Leistungsfähigkeit des entsprechenden Fahrrads. Deshalb werden auch Fahrradsättel in verschiedenen Ausführungen, Preisklassen, Qualitätsstufen und/oder mit unterschiedlichen Eigenschaften angeboten.

Die aus dem Stand der Technik bekannten Fahrradsättel weisen jedoch weiterhin Nachteile auf. Beispielsweise weist die Montage und/oder das Herstellverfahren der aus dem Stand der Technik bekannten Fahrradsättel Nachteile auf. Insbesondere ist die Montage und/oder das Herstellverfahren der aus dem Stand der Technik bekannten Fahrradsättel relativ aufwändig und/oder fehleranfällig. Ferner weisen die aus dem Stand der Technik bekannten Fahrradsättel an sich Nachteile auf, beispielsweise durch ein relativ hohes Gewicht und/oder durch eine Paarung verschiedener Materialen und/oder verschiedener Bauteile, was die Haltbarkeit und wiederum auch die Montage bzw. Herstellung der Fahrradsättel negativ beeinflussen kann.

Das Dokument EP 1 982 907 B1 offenbart die Merkmale der Präambel von Anspruch 1.

Insbesondere auf Grund der wesentlichen Rolle, die Fahrradsättel beim Gesamteindruck eines Fahrrads haben können, wie oben beschrieben, besteht deshalb Bedarf, die Eigenschaften von Fahrradsätteln weiterzuentwickeln und zumindest einen Nachteil der aus dem Stand der Technik bekannten Fahrradsättel zumindest teilweise zu verbessern.

Es ist daher eine Aufgabe der vorliegenden Erfindung, einen Fahrradsattel mit verbesserten Eigenschaften anzugeben.

Diese Aufgabe wird durch einen Sattel für ein Fahrrad gemäß den Merkmalen des Anspruchs 1 gelöst. Vorteilhafte Ausgestaltungen mit zweckmäßigen Weiterbildungen der Erfindung sind in den jeweiligen Unteransprüchen sowie in der nachfolgenden Beschreibung angegeben.

Der Sattel weist einen Sitzabschnitt mit einer Sitzfläche auf. Die Sitzfläche ist dazu eingerichtet, einen Bereich eines Körpers eines Nutzers beim Betrieb des Fahrrads zumindest teilweise aufzunehmen.

Der Sattel weist außerdem mindestens einen Montageabschnitt mit mindestens zwei voneinander beabstandeten Montageelementen, die jeweils dazu eingerichtet sind, mit einem Bereich einer Sattelstütze des Fahrrads in Eingriffsverbindung gebracht zu werden, um den Sattel an dem Fahrrad zu montieren, auf.

Der Sitzabschnitt und der Montageabschnitt sind einstückig ausgebildet. Außerdem ist der Montageabschnitt an einer der Sitzfläche gegenüberliegenden Montagefläche des Sitzabschnitts einstückig angeformt.

Durch die einstückige Ausbildung des Sitzabschnitts und des Montageabschnitts kann der Sattel relativ schnell und/oder relativ kostengünstig hergestellt werden. Beispielsweise kann der Sitzabschnitt und der Montageabschnitt zusammen in einem einzigen Spritzgussverfahren einteilig hergestellt werden. Außerdem entfällt dadurch eine Montage des Sitzabschnitts mit dem Montageabschnitt. Üblicherweise ist für die Befestigung des Sattels an der Sattelstütze ein Gestänge mit zwei Schienenelementen vorgesehen, welche an der Sattelstütze üblicherweise eingeklemmt bzw. eingespannt werden. Das Gestänge muss üblicherweise an dem Sitzabschnitt des Sattels montiert werden, indem das Gestänge an seinen Enden mit dem Sitzabschnitt befestigt wird. Ein Abschnitt des Gestänges zwischen den Enden des Gestänges kann an der Sattelstützte aufgenommen, und vorzugsweise eingeklemmt, werden. Durch die hierin vorgesehene einstückige Ausbildung des Sitzabschnitts und des Montageabschnitts kann auf eine derartig aufwändige Montage verzichtet werden.

Außerdem ermöglichen die mindestens zwei voneinander beabstandeten Montageelemente eine Montage an den üblichen (normierten) Sattelstützen, die, wie oben beschrieben, Klemmmittel aufweisen, an denen die Montageelemente eingeklemmt werden können.

Dadurch ist der hierin beschriebene Sattel an nahezu allen auf dem Markt erhältlichen Fahrrädern bzw. Sattelstützen montierbar und betriebsgemäß verwendbar.

Außerhalb kann durch die hierin beschriebene Konfiguration des Sattels, insbesondere durch die einstückige Ausbildung des Sitzabschnitts und des Montageabschnitts, der Sattel unkomplizierter und/oder schneller an der Sattelstütze, beispielsweise an einer Klemmvorrichtung der Sattelstütze, montiert werden. Wie oben bereits beschrieben, ist üblicherweise ein Gestänge mit zwei Schienenelementen, welche an der Sattelstütze üblicherweise eingeklemmt werden, für die Befestigung des Sattels an der Sattelstütze vorgesehen. Das Gestänge muss üblicherweise an dem Sitzabschnitt des Sattels montiert werden, indem das Gestänge an seinen Enden mit dem Sitzabschnitt befestigt wird. Ein Abschnitt des Gestänges zwischen den Enden des Gestänges kann an der Sattelstützte aufgenommen, und vorzugsweise eingeklemmt, werden. Da die Enden der Schienenelemente in der Regel an dem Sitzabschnitt befestigt sind, liegen die Enden des Schienenelemente in der Regel nicht frei. Somit müssen die Schienenelementen in der Regel jeweils einzeln seitlich in einen Klemmbereich der Klemmvorrichtung der Sattelstütze eingeschoben werden. Durch die hierin vorgesehene einstückige Ausbildung des Sitzabschnitts und des Montageabschnitts können die Montageelemente flexibler gestaltet werden, beispielsweise derart, dass zumindest ein Ende jedes Montageelements frei liegt und/oder von dem Sitzabschnitt beabstandet ist. Dadurch kann dieses Ende der Montageelemente in die Klemmvorrichtung der Sattelstütze eingeschoben werden, vorzugsweise entlang einer Längsmittelebene des Fahrrads. Dadurch kann die oben beschriebene aufwändige Montage der aus dem Stand der Technik bekannten Fahrradsättel an der jeweiligen Sattelstütze vereinfacht werden.

Der Sattel kann dazu eingerichtet sein, an einer Vielzahl von unterschiedlichen Fahrradklassen und/oder Fahrradtypen und/oder an Fahrrädern mit unterschiedlichen Größen und/oder Einsatzgebieten bzw. Zwecken montiert und bestimmungsgemäß verwendet zu werden. Beispielsweise kann der Sattel dazu eingerichtet sein, an Rennrädern, Mountainbikes, Gravel-Bikes, Cyclocross-Bikes, Stadträdern und/oder weiteren Fahrradtypen montiert und bestimmungsgemäß verwendet zu werden. Der Sattel kann dazu eingerichtet sein, an einoder/oder mehrspurigen Fahrrädern montiert und bestimmungsgemäß verwendet zu werden. Außerdem kann der Sattel kann dazu eingerichtet sein, an rein durch Muskelkraft angetriebenen, elektrisch angetriebenen und/oder elektrisch unterstützten Fahrrädern montiert und bestimmungsgemäß verwendet zu werden. Das Fahrrad kann zumindest teilweise und/oder zweitweise über Pedale und/oder über eine Handkurbel angetrieben werden. Ferner kann das Fahrrad als Fortbewegungsmittel dienen und/oder im Wesentlichen stationär betrieben werden, beispielswiese als Heimtrainer und/oder im Zusammenhang mit einer Trainingsrolle/Smartrolle. Das Fahrrad kann ein einziges Rad oder eine Mehrzahl an Rädern aufweisen. Das Fahrrad kann beispielsweise auch ein Lastenrad sein.

Die Sitzfläche und/oder die Montagefläche kann/können eine gewölbte und/oder gebogene Form aufweisen. Alternativ, oder zusätzlich, kann/können die Sitzfläche und/oder die Montagefläche zumindest bereichsweise eben ausgebildet sein. Ferner kann/können die Sitzfläche und/oder die Montagefläche im Wesentlichen geschlossen ausgebildet sein oder mindestens eine darin ausgebildete Öffnung aufweisen. Der Bereich eines Körpers des Nutzers, der beim Betrieb des Fahrrads zumindest teilweise an der Sitzfläche aufnehmbar ist, ist vorzugsweise zumindest ein Bereich eines Gesäßes des Nutzers und/oder zumindest ein Bereich eines Beckens des Nutzers und/oder zumindest ein Bereich eines Oberschenkels des Nutzers.

Die Montageelemente sind vorzugsweise symmetrisch zueinander ausgebildet und/oder symmetrisch zueinander angeordnet, vorzugsweise in Bezug auf eine Längsmittelebene des Sattels und/oder eine Längsmittelebene des Fahrrads, wenn der Sattel betriebsbereit auf der Sattelstütze des Fahrrads montiert ist. Die Montageelemente sind vorzugsweise derart voneinander beabstandet, dass eines der Montageelemente auf einer ersten Seite bzw. einem ersten Ende einer Klemmvorrichtung der Sattelstütze eingeschoben bzw. eingeklemmt werden kann und ein weiteres der Montageelemente auf einer zweiten, vorzugsweise der ersten Seite gegenüberliegenden, Seite bzw. einem zweiten, vorzugsweise dem ersten Ende gegenüberliegenden, Ende der Klemmvorrichtung der Sattelstütze eingeschoben bzw. eingeklemmt werden kann.

Vorzugsweise stehen die Montageelemente jeweils in einem Winkel von 70° bis 110° im Wesentlichen rechtwinklig von der Montagefläche des Sitzabschnitts ab. Dadurch können die Montageelemente zur Mitte des Sattels hin, oder zumindest von einem Rand des Sattels bzw. des Sitzabschnitts beabstandet, angeordnet und mit der Sattelstütze, vorzugsweise mit mindestens einer Klemmvorrichtung der Sattelstütze, in Eingriffsverbindung gebracht werden. Dies kann die Belastungszustände der Montageelemente begünstigen und somit das Risiko einer Beschädigung, beispielsweise eines Ermüdungsbruchs, der Montageelemente reduzieren. Dadurch kann außerdem die Länge der Montagelemente reduziert werden, wodurch beispielsweise die Bauhöhe des Montageabschnitts, und somit auch des Sattels, reduziert werden.

Vorzugsweise ist der Sattel aus Kunststoff, vorzugsweise mittels eines Spritzgussverfahrens, hergestellt. Denkbar sind auch weitere und/oder alternative Materialien, beispielwese Faserverbundwerkstoffe und/oder Carbon. Außerdem kann der Sattel zumindest eine Beschichtung und/oder eine Verkleidung und/oder einen Bezug aufweisen, die/der zumindest an einem Bereich, vorzugsweise zumindest einen Bereich der Sitzfläche, angeordnet ist, beispielsweise um den Komfort des Sattels gegenüber dem Nutzer zu erhöhen und/oder um weitere Eigenschaften des Sattels zu beeinflussen.

Vorzugsweise sind die Montageelemente jeweils zumindest bereichsweise durchgehend mit der Montagefläche des Sitzabschnitts einstückig verbunden. Dadurch kann die Stützwirkung der Montageelemente an der Montagefläche erhöht und/oder optimiert werden. Außerdem kann dadurch die Last des Nutzers, wenn der Nutzer auf dem Sattel angeordnet ist bzw. sitzt, auf den durchgehenden Bereich der Montageelemente an der Montagefläche verteilt werden. Dies kann die Belastungszustände der Montageelemente begünstigen und somit das Risiko einer Beschädigung, beispielsweise eines Ermüdungsbruchs, der Montageelemente reduzieren.

Vorzugsweise sind die Montageelemente jeweils entlang einer Länge von mindestens 2 cm, bevorzugt mindestens 3 cm, bevorzugt mindestens 5 cm, bevorzugt mindestens 7 cm, bevorzugter mindestens 9 cm, am bevorzugtesten mindestens 10 cm, durchgehend mit der Montagefläche des Sitzabschnitts einstückig verbunden.

Vorzugsweise erstreckt sich ein seitlicher Rand der Montagefläche zumindest bereichsweise seitlich über den Montageabschnitt, vorzugsweise um mindestens 2 cm, bevorzugter mindestens 2,5 cm, bevorzugter mindestens 3 cm, bevorzugter mindestens 3,5 cm, bevorzugter mindestens 4 cm, bevorzugter mindestens 4,5 cm, am bevorzugtesten mindestens 5 cm. Mit anderen Worten, die Montagefläche kann seitlich über den Montageabschnitt überstehen, in Bezug auf eine Perspektive von oben auf die Sitzfläche, vorzugsweise rechtwinklig zur Sitzfläche, und/oder entlang einer Querebene/Horizontalebene. Dadurch kann der Montageabschnitt, insbesondere die Montageelemente, zur Mitte des Sattels hin, oder zumindest von einem Rand des Sattels bzw. des Sitzabschnitts beabstandet, angeordnet und mit der Sattelstütze, vorzugsweise mit mindestens einer Klemmvorrichtung der Sattelstütze, in Eingriffsverbindung gebracht werden. Dies kann die Belastungszustände der Montageelemente begünstigen und somit das Risiko einer Beschädigung, beispielsweise eines Ermüdungsbruchs, der Montageelemente reduzieren.

Der Begriff "seitlicher Rand" bezieht sich auf eine Perspektive entlang eine Längsmittelebene des Sattels und/oder des Fahrrads, wenn der Fahrradsattel auf dem Fahrrad montiert ist. Vorzugsweise ist zumindest ein Bereich der Montagefläche zwischen dem jeweiligen Montageelement und dem Rand des Sitzabschnitts angeordnet. Der oben genannte Überstand bzw. die oben genannten Überstände des seitlichen Rands der Montagefläche über den Montageabschnitt werden vorzugsweise an der breitesten Stelle des Sattels bzw. des Sitzabschnitts, die in einer Ebene mit zumindest einem Abschnitt des Montageabschnitts liegt, gemessen bzw. bestimmt.

Vorzugsweise sind die Montageelemente in einem Abstand von mindestens 2 cm, bevorzugt mindestens 2,5 cm, bevorzugter mindestens 3 cm, bevorzugter mindestens 3,5 cm, bevorzugter mindestens 4 cm, bevorzugter mindestens 4,5 cm, am bevorzugtesten mindestens 5 cm, von einem seitlichen Rand der Sitzfläche mit der Montagefläche des Sitzabschnitts einstückig verbunden. Der oben genannte Abstand bzw. die oben genannten Abstände werden vorzugsweise an der breitesten Stelle des Sattels bzw. des Sitzabschnitts, die in einer Ebene mit zumindest einem Abschnitt des jeweiligen Montageelements liegt, gemessen bzw. bestimmt. Durch eine derartige Konfiguration können die Belastungszustände der Montageelemente begünstigt und somit das Risiko einer Beschädigung, beispielsweise eines Ermüdungsbruchs, der Montageelemente reduzieren werden, wie bereits oben erläutert.

Die Montageelemente weisen jeweils mindestens eine mit dem jeweiligen Montageelement einstückig ausgebildete Schiene auf, die dazu eingerichtet ist, von einem Gegenelement der Sattelstütze des Fahrrads zumindest teilweise, vorzugsweise verschiebbar, aufgenommen zu werden, um den Sattel an der Sattelstütze des Fahrrads, vorzugsweise verschiebbar, zu montieren.

Üblicherweise ist für die Befestigung des Sattels an der Sattelstütze ein Gestänge mit zwei Schienenelementen vorgesehen, welche an der Sattelstütze üblicherweise eingeklemmt werden. Das Gestänge muss üblicherweise an dem Sitzabschnitt des Sattels montiert werden. Durch das Vorsehen von einstückig ausgebildeten Schienen an den Montageelementen kann der hierin beschriebene Sattel relativ unkompliziert an bereits bestehenden/vorhandenen Sattelstützen montiert und verwendet werden. Vorzugsweise weisen die hierin vorgesehenen Schienen jeweils mindestens ein, vorzugsweise freiliegendes, Ende auf, über das die Schienen jeweils in einen Bereich der Sattelstütze, vorzugsweise in mindestens eine Klemmvorrichtung der Sattelstütze, einführbar ist, um den Sattel an der Sattelstütze zu montieren. Vorzugsweise ist die Schiene an einem Ende, vorzugsweise einem freien distalen Ende, des jeweiligen Montageelements ausgebildet.

Die Schiene ist als vergrößerter Abschnitt des jeweiligen Montageelements, relativ zu einem benachbarten Abschnitt des Montageelements, an einem Ende, vorzugsweise einem freien distalen Ende, des jeweiligen Montageelements ausgebildet. Durch die Konfiguration der Schiene als vergrößerter Abschnitt des jeweiligen Montageelements kann die Arretierung der Schiene an der Sattelstütze, beispielsweise an mindestens einer Klemmvorrichtung der Sattelstütze, begünstigt werden, beispielsweise durch eine größere Angriffsfläche zwischen der Sattelstütze und der Schiene, ohne dabei die gesamten Montageelemente vergrößert auszubilden. Dadurch kann der Sattel, insbesondere die Montageelemente, gewichtsoptimiert gestaltet werden. Außerdem kann dadurch der Sattel aerodynamischer geformt werden und/oder die Menge an Material zum Herstellen des Sattels kann reduziert werden.

Vorzugsweise erstrecken sich die Montageelemente jeweils zumindest abschnittsweise in einer Ebene, die in oder parallel zu einer Längsmittelebene des Sattels und/oder einer Längsmittelebene des Fahrrads, wenn der Sattel betriebsgemäß auf der Sattelstütze des Fahrrads montiert ist, und/oder einer Längsachse der Sattelstütze des Fahrrads, wenn der Sattel betriebsgemäß auf der Sattelstütze des Fahrrads montiert ist, verläuft. Dadurch können die Biegebelastungen der Montageelemente zumindest in dem/den oben genannten Abschnitten reduziert werden.

Vorzugsweise weisen die Montageelemente jeweils mindestens einen ersten Abschnitt auf, der sich im Wesentlichen geradlinig von der Montagefläche erstreckt. Alternativ, oder zusätzlich, weisen die Montageelemente jeweils einen ersten Abschnitt und mindestens einen zweiten Abschnitt auf. Vorzugsweise ist verlaufen der erste Abschnitt und der zweite Abschnitt in einem Winkel von 25° bis 155°, vorzugsweise von 35° bis 145°, bevorzugter von 45° bis 135°, bevorzugter von 55° bis 125°, bevorzugter von 65° bis 115°, am bevorzugtesten von 75° bis 105°, zueinander. Der zweite Abschnitt kann ein freies Ende der Montageelemente, das vorzugsweise an der Sattelstütze einklemmbar ist, zumindest teilweise definieren. Alternativ, oder zusätzlich, kann zumindest ein Abschnitt der Montageelemente, beispielsweise der oben genannte erste Abschnitt und/oder der oben genannte zweite Abschnitt gekrümmt und/oder geschwungen ausgebildet sein.

Durch die oben definierten Konfigurationen des ersten Abschnitts und/oder des zweiten Abschnitts der Montageelemente können die Belastungen der Montageelemente im Betrieb optimiert werden und/oder die Ästhetik des Sattels kann angepasst werden und/oder der Sattel kann zum Montieren an unterschiedlichen Befestigungssystemen, die an verschiedenen Sattelstützen vorgesehen sein könnten, geeignet angepasst werden.

Vorzugsweise verbindet der erste Abschnitt die Montagefläche des Sitzabschnitts und den zweiten Abschnitt einstückig miteinander. Vorzugsweise verläuft der zweite Abschnitt im Wesentlichen parallel zur Sitzfläche. Alternativ, oder zusätzlich, verläuft der erste Abschnitt in einer Ebene, die in oder parallel zu einer Längsmittelebene des Sattels und/oder einer Längsmittelebene des Fahrrads, wenn der Sattel betriebsgemäß auf der Sattelstütze des Fahrrads montiert ist, und/oder einer Längsachse der Sattelstütze des Fahrrads, wenn der Sattel betriebsgemäß auf der Sattelstütze des Fahrrads montiert ist, verläuft.

Vorzugsweise sind die Montageelemente jeweils zumindest in einem Bereich vor und/oder über der Sattelstütze geschlossen ausgebildet, in Bezug auf eine seitliche Perspektive auf den Sattel, im Wesentlichen senkrecht zu einer Fahrtrichtung des Fahrrads und/oder einer Längsmittelebene des Fahrrads, wenn der Sattel betriebsgemäß auf der Sattelstütze des Fahrrads montiert ist und das Fahrrad betriebsgemäß positioniert ist. Mit anderen Worten, die Montageelemente können zumindest bereichsweise frei von Öffnungen sein. Dadurch kann das Erscheinungsbild des Sattels ästhetisch ansprechender gestaltet werden. Außerdem kann dadurch eine Last, beispielsweise das Körpergewicht des Nutzers, wenn der Nutzer auf dem Sattel angeordnet ist bzw. sitzt, in den Montageelementen großflächiger verteilt werden. Vorzugsweise sind mindestens 40%, bevorzugt mindestens 45%, bevorzugter mindestens 50%, bevorzugter mindestens 55%, bevorzugter mindestens 65%, bevorzugter mindestens 70%, bevorzugter mindestens 75%, bevorzugter mindestens 80%, bevorzugter mindestens 85%, bevorzugter mindestens 90%, bevorzugter mindestens 95%, einer gesamten Außenfläche der Montagelemente geschlossen, d.h., frei von Öffnungen.

Vorzugsweise sind die Montageelemente jeweils dazu eingerichtet, zumindest bereichsweise an der Sattelstütze des Fahrrads geklemmt zu werden, um den Sattel an der Sattelstütze zu fixieren. Wie bereits erläutert, ist für die Befestigung des Sattels an der Sattelstütze ein Gestänge mit zwei Schienenelementen vorgesehen, welche an der Sattelstütze üblicherweise mittels mindestens einer Klemmvorrichtung eingeklemmt werden. Durch die entsprechende Konfiguration der Montageelemente, zumindest bereichsweise an der Sattelstütze des Fahrrads geklemmt zu werden, um den Sattel an der Sattelstütze zu fixieren, kann der hierin beschriebene an nahezu allen auf dem Markt erhältlichen Fahrrädern bzw. Sattelstützen montierbar und betriebsgemäß verwendbar.

Vorzugsweise sind die Montageelemente jeweils an einem Befestigungsbereich an der Montagefläche einstückig verbunden. Vorzugsweise sind die Befestigungsbereiche voneinander beabstandet sind, vorzugsweise in einem Abstand von höchstens 12 cm, vorzugsweise höchstens 11 cm, bevorzugter höchstens 10 cm, bevorzugter höchstens 9 cm, bevorzugter höchstens 8 cm, bevorzugter höchstens 7 cm, am bevorzugtesten höchstens 6 cm.

Vorzugsweise weisen die Montageelemente jeweils mindestens ein Ende auf, welches freiliegend und/oder von dem Sitzabschnitt beabstandet ausgebildet ist, vorzugsweise so dass das Ende des jeweiligen Montageelements in einen Bereich der Sattelstütze, vorzugsweise in mindestens eine Klemmvorrichtung der Sattelstütze, eingeführt werden kann, um den Sattel an der Sattelstütze des Fahrrads, vorzugsweise verschiebbar, zu montieren. Wie bereits weiter oben beschrieben, kann dadurch die oben beschriebene aufwändige Montage der aus dem Stand der Technik bekannten Fahrradsättel an der jeweiligen Sattelstütze vereinfacht werden. Vorzugsweise weisen die Montageelemente jeweils mindestens eine mit dem jeweiligen Montageelement einstückig ausgebildete Schiene aufweisen, die dazu eingerichtet ist, von einem Gegenelement der Sattelstütze des Fahrrads zumindest teilweise, vorzugsweise verschiebbar, aufgenommen zu werden, um den Sattel an der Sattelstütze es Fahrrads, vorzugsweise verschiebbar, zu montieren. Das oben beschriebene freiliegende und/oder von dem Sitzabschnitt beabstandet ausgebildete Ende des jeweiligen Montageelements ist vorzugsweise ein Ende der jeweiligen Schiene des Montageelements.

Vorzugsweise ist/sind der Montageabschnitt und/oder der Sitzabschnitt im Wesentlichen starr ausgebildet.

Vorzugsweise sind der Montageabschnitt und der Sitzabschnitt relativ zueinander im Wesentlichen unbeweglich.

Die vorliegende Erfindung betrifft außerdem ein Fahrrad, welches eine Sattelstütze und einen an der Sattelstütze montierten Sattel nach einem der hierin beschriebenen Ausführungen aufweist.

Die eingangs beschriebene Aufgabe wird außerdem durch ein Herstellungsverfahren zum Herstellen eines Sattels, insbesondere nach einem der hierin beschriebenen Ausführungen, gelöst. Die vorstehend zu dem Sattel beschriebenen Ausführungen und/oder Merkmale und/oder Vorteile gelten analog für das Herstellungsverfahren.

Das Herstellungsverfahren weist folgenden Schritte auf:
Bereitstellen zumindest eines Materials zum Herstellen des Sattels;
Herstellen des Sattels derart, dass:
   der Sattel einen Sitzabschnitt mit einer Sitzfläche aufweist, die dazu eingerichtet ist, einen Bereich eines Körpers eines Nutzers beim Betrieb des Fahrrads zumindest teilweise aufzunehmen;
   der Sattel mindestens einen Montageabschnitt mit mindestens zwei Montageelementen aufweist, die jeweils dazu eingerichtet sind, mit einem Bereich einer Sattelstütze des Fahrrads in Eingriffsverbindung gebracht zu werden, um den Sattel am Fahrrad zu montieren; und
   der Sitzabschnitt und der Montageabschnitt bei dem Herstellungsverfahren einstückig ausgebildet werden, wobei der Montageabschnitt an einer der Sitzfläche gegenüberliegenden Montagefläche des Sitzabschnitts einstückig angeformt wird;
   die Montageelemente jeweils mindestens eine mit dem jeweiligen Montageelement einstückig ausgebildete Schiene aufweisen, die dazu eingerichtet ist, von einem Gegenelement der Sattelstütze des Fahrrads zumindest teilweise aufgenommen zu werden, um den Sattel an der Sattelstütze des Fahrrads zu montieren; und
   die Schiene als vergrößerter Abschnitt des jeweiligen Montageelements, relativ zu einem benachbarten Abschnitt des Montageelements, an einem Ende des jeweiligen Montageelements ausgebildet ist.

Vorzugsweise wird der Sattel in einem Spritzgussverfahren aus Kunststoff hergestellt.

Die eingangs beschriebene Aufgabe wird außerdem durch ein Montageverfahren zum Montieren eines Sattels nach einem der hierin beschriebenen Ausführungen an einer Sattelstütze eines Fahrrads gelöst. Die vorstehend zu dem Sattel beschriebenen Ausführungen und/oder Merkmale und/oder Vorteile gelten analog für das Montageverfahren.

Das Montageverfahren weist die folgenden Schritte auf:
Bereitstellen des Sattels;
Positionieren des Sattels relativ zu einem Montagemechanismus an der Sattelstütze, sodass die Montageelemente des Sattels jeweils mit dem Montagemechanismus der Sattelstütze in Eingriffsverbindung gelangen; und
Sichern der Montageelemente an dem Montagemechanismus.

Die Montageelementen weisen jeweils mindestens eine mit dem jeweiligen Montageelement einstückig ausgebildete Schiene auf. Jede Schiene weist vorzugsweise mindestens ein freiliegendes und/oder von dem Sitzabschnitt beabstandes Ende auf, wobei das Ende des jeweiligen Montageelements in einen Bereich der Sattelstütze, vorzugsweise in einen Bereich der Sattelstütze, vorzugsweise in mindestens eine Klemmvorrichtung der Sattelstütze, einführbar ist, um den Sattel an der Sattelstütze des Fahrrads, vorzugsweise verschiebbar, zu montieren.

Vorzugsweise werden, vor dem Sichern der Montageelemente an dem Montagemechanismus, die Montageelemente zumindest bereichsweise in dem Montagemechanismus verschobenen, um den Sattel relativ zu dem Montagemechanismus zu positionieren und/oder zu orientieren.

Weitere Vorteile, Merkmale und Einzelheiten der Erfindung ergeben sich aus der nachfolgenden Beschreibung eines bevorzugten Ausführungsbeispiels sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar. Die Erfindung wird durch die beigefügten Ansprüche begrenzt.
- Fig. 1: zeigt, in einer perspektivischen und schematischen Ansicht, einen erfindungsgemäßen Sattel für ein Fahrrad;
- Fig. 2: zeigt, in einer weiteren perspektivischen und schematischen Ansicht, den Sattel aus Fig. 1;
- Fig. 3: zeigt, in einer weiteren perspektivischen und schematischen Ansicht, den Sattel aus Fig. 1 und 2;
- Fig. 4: zeigt, in einer perspektivischen und schematischen Ansicht, ein erfindungsgemäßes Fahrrad mit dem Sattel aus Fig. 1 bis 3.

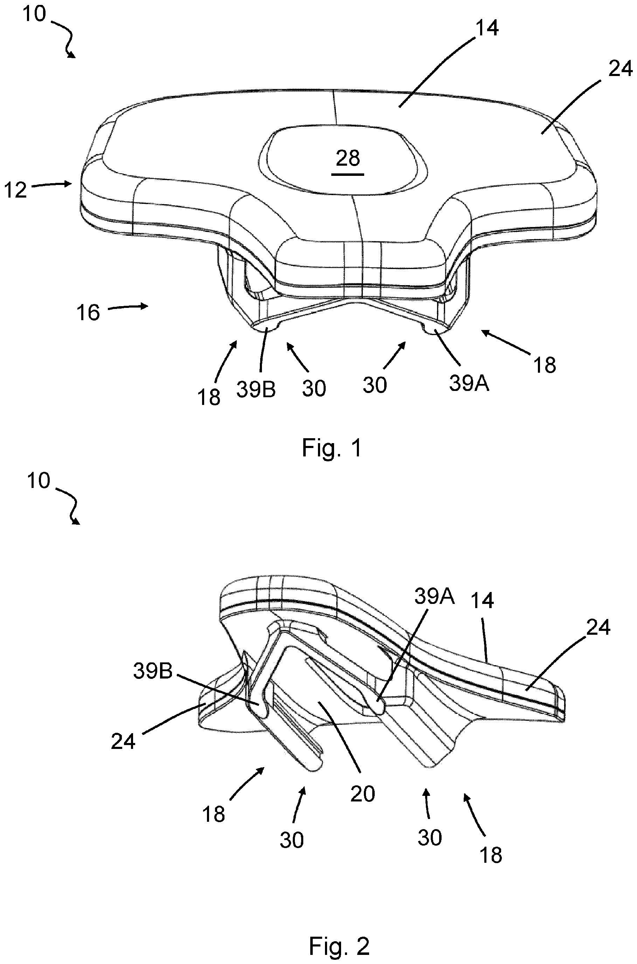

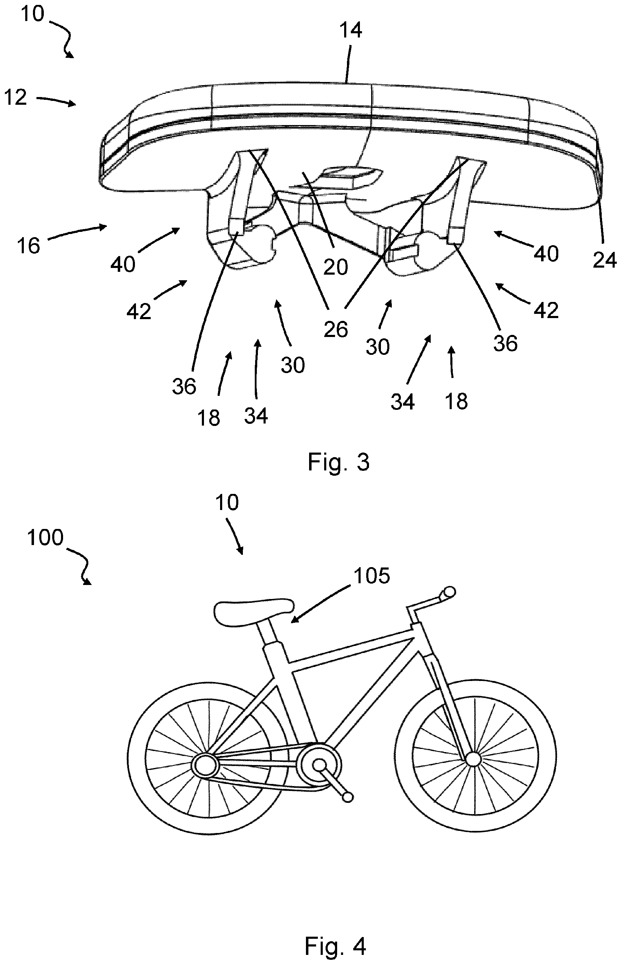

Fig. 1 bis 3 zeigen, in perspektivischen und schematischen Ansichten, einen Sattel 10 für ein Fahrrad gemäß einer Ausführungsform. Der Sattel 10 weist einen Sitzabschnitt 12 mit einer Sitzfläche 14 auf. Die Sitzfläche 14 ist dazu eingerichtet, einen Bereich eines Körpers, vorzugsweise ein Gesäß, eines Nutzers beim Betrieb des Fahrrads zumindest teilweise aufzunehmen. Der Sattel 10 umfasst außerdem einen Montageabschnitt 16 mit zwei voneinander beabstandeten Montageelementen 18, die jeweils dazu eingerichtet sind, mit einem Bereich einer Sattelstütze des Fahrrads in Eingriffsverbindung gebracht zu werden, um den Sattel an dem Fahrrad zu montieren (siehe Fig. 4 und die Beschreibung hierzu weiter unten).

Es ist außerdem vorgesehen, dass der Sitzabschnitt 12 und der Montageabschnitt 16 einstückig ausgebildet sind. Insbesondere ist der Montageabschnitt 16 an einer der Sitzfläche 14 gegenüberliegenden Montagefläche 20 des Sitzabschnitts 12 (siehe Fig. 2 und 3) einstückig angeformt. In der in den Fig. 1 bis 3 gezeigten Ausführungsform des Sattels 10 sind die Montageelemente 18 jeweils durchgehend mit der Montagefläche 20 des Sitzabschnitts einstückig verbunden. Alternativ können die Montageelemente 18 jeweils nur bereichsweise durchgehend mit der Montagefläche 20 des Sitzabschnitts 12 einstückig verbunden sein. Beispielsweise können Abschnitte der Montageelemente 18, in denen die Montageelemente 18 jeweils durchgehend mit der Montagefläche 20 des Sitzabschnitts 12 einstückig verbunden sind, voneinander beabstandet sein. Beispielsweise können die Montageelemente 18 jeweils entlang einer Länge von mindestens 2 cm, bevorzugt mindestens 3 cm, bevorzugt mindestens 5 cm, bevorzugt mindestens 7 cm, bevorzugter mindestens 9 cm, am bevorzugtesten mindestens 10 cm, durchgehend mit der Montagefläche 20 des Sitzabschnitts 12 einstückig verbunden sein.

Die Montageelemente 18 sind jeweils in einem Abstand von einem seitlichen Rand 24 der Sitzfläche 14 an entsprechenden Befestigungsbereichen 26 mit der Montagefläche 20 des Sitzabschnitts 12 einstückig verbunden. Der Abstand beträgt vorzugsweise mindestens 2 cm, bevorzugter mindestens 2,5 cm, bevorzugter mindestens 3 cm, bevorzugter mindestens 3,5 cm, bevorzugter mindestens 4 cm, bevorzugter mindestens 4,5 cm, am bevorzugtesten mindestens 5 cm.

Der Sattel 10 weist außerdem eine Öffnung 28 auf, die sich vollständig durch den Sitzabschnitt 12 erstreckt. Alternativ kann der Sattel 10 eine Mehrzahl von Öffnungen oder keine Öffnungen aufweisen.

In der in den Fig. 1 bis 3 gezeigten Ausführungsform des Sattels 10 weisen die Montageelemente 18 jeweils mindestens eine mit dem jeweiligen Montageelement 18 einstückig ausgebildete Schiene 30 auf. Die Schienen 30 sind jeweils an einem Ende 34 des jeweiligen Montageelements 18 angeordnet. Das Ende 34 des jeweiligen Montageelements 18 ist ein freies distales Ende des jeweiligen Montageelements 18.

Die Schienen 30 können jeweils dazu eingerichtet sein, von einem Gegenelement der Sattelstütze des Fahrrads zumindest teilweise, vorzugsweise verschiebbar, aufgenommen zu werden, um den Sattel an der Sattelstütze des Fahrrads, vorzugsweise verschiebbar, zu montieren.

Jede Schiene 30 kann als vergrößerter Abschnitt des jeweiligen Montageelements 18, relativ zu einem benachbarten Abschnitt 36 des Montageelements 18, ausgebildet sein (siehe Fig. 3).

Die Montageelemente 18 weisen jeweils ein Ende 39A, 39B auf, welches freiliegend und von dem Sitzabschnitt 12 beabstandet ausgebildet ist (siehe Fig. 1 und 2). Die Enden 39A, 39B können in einen Bereich der Sattelstütze des jeweiligen Fahrrads, vorzugsweise in mindestens eine Klemmvorrichtung der Sattelstütze, eingeführt werden, um den Sattel 10 an der Sattelstütze verschiebbar zu montieren.

Gemäß der Ausführungsform der Fig. 1 bis 3, weisen die Montageelemente 18 einen ersten Abschnitt 40 und einen zweiten Abschnitt 42 auf (siehe Fig. 3). Der erste Abschnitt 40 und der zweite Abschnitt 42 verlaufen in einem Winkel zueinander. Der Winkel zwischen dem ersten Abschnitt 40 und dem zweiten Abschnitt 42 beträgt vorzugsweise 25° bis 155°, vorzugsweise von 35° bis 145°, bevorzugter von 45° bis 135°, bevorzugter von 55° bis 125°, bevorzugter von 65° bis 115°, am bevorzugtesten von 75° bis 105°.

Alternativ können die Montageelemente 18 jeweils nur einen Abschnitt, beispielsweise nur den Abschnitt 40, aufweisen, der sich im Wesentlichen geradlinig von der Montagefläche 20 erstreckt. Die jeweilige Schiene 30 kann beispielsweise an einem entsprechenden, vorzugsweise distalen, Ende des nur einen Abschnitts, beispielsweise des Abschnitts 40, angeordnet sein.

Fig. 4 zeigt, in einer perspektivischen und schematischen Ansicht, ein erfindungsgemäßes Fahrrad 100 mit dem Sattel 10 aus Fig. 1 bis 3. Das Fahrrad 100 weist eine Sattelstütze 105, an welcher der Sattel 10 montiert ist. Vorzugsweise sind die Montageelemente 18, genauer genommen die Schienen 30, zumindest teilweise in einer Klemmvorrichtung der Sattelstütze 105 eingeklemmt bzw. eingespannt, um den Sattel 10 an der Sattelstütze 105 zu fixieren.

## Patentansprüche

1. Sattel (10) für ein Fahrrad (100), aufweisend:
einen Sitzabschnitt (12) mit einer Sitzfläche (14), die dazu eingerichtet ist, einen Bereich eines Körpers eines Nutzers beim Betrieb des Fahrrads (100) zumindest teilweise aufzunehmen; und
mindestens einen Montageabschnitt (16) mit mindestens zwei voneinander beabstandeten Montageelementen (18), die jeweils dazu eingerichtet sind, mit einem Bereich einer Sattelstütze (105) des Fahrrads (100) in Eingriffsverbindung gebracht zu werden, um den Sattel (10) an dem Fahrrad (100) zu montieren;
wobei der Sitzabschnitt (12) und der Montageabschnitt einstückig ausgebildet sind und wobei der Montageabschnitt (16) an einer der Sitzfläche (14) gegenüberliegenden Montagefläche (20) des Sitzabschnitts (12) einstückig angeformt ist;
wobei die Montageelemente (18) jeweils mindestens eine mit dem jeweiligen Montageelement (18) einstückig ausgebildete Schiene (30) aufweisen, die dazu eingerichtet ist, von einem Gegenelement der Sattelstütze (105) des Fahrrads (100) zumindest teilweise aufgenommen zu werden, um den Sattel (10) an der Sattelstütze (105) des Fahrrads (100) zu montieren; **dadurch gekennzeichnet, dass**
die Schiene (30) als vergrößerter Abschnitt des jeweiligen Montageelements (18), relativ zu einem benachbarten Abschnitt des Montageelements (18), an einem Ende (34) des jeweiligen Montageelements (18) ausgebildet ist.

2. Sattel (10) nach Anspruch 1, wobei die Montageelemente (18) jeweils zumindest bereichsweise durchgehend mit der Montagefläche (20) des Sitzabschnitts (12) einstückig verbunden sind.

3. Sattel (10) nach Anspruch 1 oder 2, wobei die Montageelemente (18) jeweils entlang einer Länge von mindestens 2 cm, bevorzugt mindestens 3 cm, bevorzugt mindestens 5 cm, bevorzugt mindestens 7 cm, bevorzugter mindestens 9 cm, am bevorzugtesten mindestens 10 cm, durchgehend mit der Montagefläche (20) des Sitzabschnitts (12) einstückig verbunden sind.

4. Sattel (10) nach einem der vorhergehenden Ansprüche, wobei die Montageelemente (18) jeweils in einem Abstand von mindestens 2 cm, bevorzugt mindestens 2,5 cm, bevorzugter mindestens 3 cm, bevorzugter mindestens 3,5 cm, bevorzugter mindestens 4 cm, bevorzugter mindestens 4,5 cm, am bevorzugtesten mindestens 5 cm, von einem seitlichen Rand (24) der Sitzfläche (14) mit der Montagefläche (20) des Sitzabschnitts (12) einstückig verbunden.

5. Sattel (10) nach einem der vorhergehenden Ansprüche, wobei die Schiene (30) dazu eingerichtet ist, von dem Gegenelement der Sattelstütze (105) des Fahrrads (100) verschiebbar aufgenommen zu werden.

6. Sattel (10) nach einem der vorhergehenden Ansprüche, wobei die Schiene (30) an einem freien distalen Ende (34) des jeweiligen Montageelements (18) ausgebildet ist.

7. Sattel (10) nach einem der vorhergehenden Ansprüche, wobei die Montageelemente (18) sich jeweils zumindest abschnittsweise in einer Ebene erstrecken, die in oder parallel zu einer Längsmittelebene des Sattels (10) und/oder einer Längsmittelebene des Fahrrads (100), wenn der Sattel (10) betriebsgemäß auf der Sattelstütze (105) des Fahrrads (100) montiert ist, und/oder einer Längsachse der Sattelstütze (105) des Fahrrads (100), wenn der Sattel (10) betriebsgemäß auf der Sattelstütze (105) des Fahrrads (100) montiert ist, verläuft.

8. Sattel (10) nach einem der vorhergehenden Ansprüche, wobei die Montageelemente (18) jeweils:
mindestens einen ersten Abschnitt (40), der sich im Wesentlichen geradlinig von der Montagefläche (20) erstreckt, aufweisen;
und/oder
einen ersten Abschnitt (40) und mindestens einen zweiten Abschnitt (42) aufweisen, wobei der erste Abschnitt (40) und der zweite Abschnitt (42) in einem Winkel von 25° bis 155°, vorzugsweise von 35° bis 145°, bevorzugter von 45° bis 135°, bevorzugter von 55° bis 125°, bevorzugter von 65° bis 115°, am bevorzugtesten von 75° bis 105°, zueinander verlaufen.

9. Sattel (10) nach Anspruch 8, wobei der erste Abschnitt (40) die Montagefläche (20) des Sitzabschnitts (12) und den zweiten Abschnitt (42) einstückig verbindet, und wobei
der zweite Abschnitt (42) im Wesentlichen parallel zur Sitzfläche (14) verläuft; und/oder
der erste Abschnitt (40) in einer Ebene verläuft, die in oder parallel zu einer Längsmittelebene des Sattels (10) und/oder einer Längsmittelebene des Fahrrads (100), wenn der Sattel (10) betriebsgemäß auf der Sattelstütze (105) des Fahrrads (100) montiert ist, und/oder einer Längsachse der Sattelstütze (105) des Fahrrads (100), wenn der Sattel (10) betriebsgemäß auf der Sattelstütze (105) des Fahrrads (100) montiert ist, verläuft.

10. Sattel (10) nach einem der vorhergehenden Ansprüche, wobei, in Bezug auf eine seitliche Perspektive auf den Sattel (10), im Wesentlichen senkrecht zu einer Fahrtrichtung des Fahrrads (100) und/oder einer Längsmittelebene des Fahrrads (100), wenn der Sattel (10) betriebsgemäß auf der Sattelstütze (105) des Fahrrads (100) montiert ist und das Fahrrad (100) betriebsgemäß positioniert ist, die Montageelemente (18) jeweils zumindest in einem Bereich vor und/oder über der Sattelstütze (105) geschlossen ausgebildet sind.

11. Sattel (10) nach einem der vorhergehenden Ansprüche, wobei die Montageelemente (18) jeweils an einem Befestigungsbereich (26) an der Montagefläche (20) einstückig verbunden sind, wobei die Befestigungsbereiche (26) voneinander beabstandet sind, vorzugsweise in einem Abstand von höchstens 12 cm, vorzugsweise höchstens 11 cm, bevorzugter höchstens 10 cm, bevorzugter höchstens 9 cm, bevorzugter höchstens 8 cm, bevorzugter höchstens 7 cm, am bevorzugtesten höchstens 6 cm.

12. Sattel (10) nach einem der vorhergehenden Ansprüche, wobei die Montageelemente (18) jeweils mindestens ein Ende (39A, 39B) aufweisen, welches freiliegend und/oder von dem Sitzabschnitt beabstandet ausgebildet ist, vorzugsweise so dass das Ende (39A, 39B) des jeweiligen Montageelements (18) in einen Bereich der Sattelstütze (105), vorzugsweise in mindestens eine Klemmvorrichtung der Sattelstütze (105), eingeführt werden kann, um den Sattel (10) an der Sattelstütze (105) des Fahrrads (100), vorzugsweise verschiebbar, zu montieren.

13. Fahrrad (100) aufweisend eine Sattelstütze (105) und einen an der Sattelstütze (105) montierten Sattel (10) nach einem der vorhergehenden Ansprüche.

14. Herstellungsverfahren zum Herstellen eines Sattels (10), insbesondere nach einem der Ansprüche 1 bis 12, aufweisend:
Bereitstellen zumindest eines Materials zum Herstellen des Sattels (10);
Herstellen des Sattels (10) derart, dass:
der Sattel (10) einen Sitzabschnitt (12) mit einer Sitzfläche (14) aufweist, die dazu eingerichtet ist, einen Bereich eines Körpers eines Nutzers beim Betrieb des Fahrrads (100) zumindest teilweise aufzunehmen;
der Sattel (10) mindestens einen Montageabschnitt (16) mit mindestens zwei Montageelementen (18) aufweist, die jeweils dazu eingerichtet sind, mit einem Bereich einer Sattelstütze (105) des Fahrrads (100) in Eingriffsverbindung gebracht zu werden, um den Sattel (10) am Fahrrad (100) zu montieren;
der Sitzabschnitt (12) und der Montageabschnitt (16) bei dem Herstellungsverfahren einstückig ausgebildet werden, wobei der Montageabschnitt (16) an einer der Sitzfläche gegenüberliegenden Montagefläche (20) des Sitzabschnitts (12) einstückig angeformt wird;
die Montageelemente (18) jeweils mindestens eine mit dem jeweiligen Montageelement (18) einstückig ausgebildete Schiene (30) aufweisen, die dazu eingerichtet ist, von einem Gegenelement der Sattelstütze (105) des Fahrrads (100) zumindest teilweise aufgenommen zu werden, um den Sattel (10) an der Sattelstütze (105) des Fahrrads (100) zu montieren; **dadurch gekennzeichnet, dass**
die Schiene (30) als vergrößerter Abschnitt des jeweiligen Montageelements (18), relativ zu einem benachbarten Abschnitt des Montageelements (18), an einem Ende (34) des jeweiligen Montageelements (18) ausgebildet ist.

15. Montageverfahren zum Montieren eines Sattels (10) nach einem der Ansprüche 1 bis 12 an einer Sattelstütze (105) eines Fahrrads (100), aufweisend:
Bereitstellen des Sattels (10);
Positionieren des Sattels (10) relativ zu einem Montagemechanismus an der Sattelstütze (105), sodass die Montageelemente (18) des Sattels (10) jeweils mit dem Montagemechanismus der Sattelstütze (105) in Eingriffsverbindung gelangen; und
Sichern der Montageelemente (18) an dem Montagemechanismus.

## Claims

1. A saddle (10) for a bicycle (100), comprising:
a seat portion (12) having a seat surface (14) configured to at least partially support a region of a body of a user during operation of the bicycle (100); and
at least one mounting portion (16) comprising at least two mounting members (18) which are spaced apart from each other, each mounting member being configured to be brought into an engaging connection with a region of a seat post (105) of the bicycle (100) in order to mount the saddle (10) to the bicycle (100);
wherein the seat portion (12) and the mounting portion are integrally formed and wherein the mounting portion (16) is integrally formed on a mounting surface (20) of the seat portion (12) which is opposite from the seat surface (14);
wherein the mounting members (18) each comprise at least one rail (30) formed integrally with the respective mounting member (18) and configured to be at least partially received by a counter member of the seat post (105) of the bicycle (100) in order to mount the saddle (10) to the seat post (105) of the bicycle (100); **characterized in that**
the rail (30) is configured as an enlarged portion of the respective mounting member (18), relative to an adjacent portion of the mounting member (18), at one end (34) of the respective mounting member (18).

2. The saddle (10) according to claim 1, wherein the mounting members (18) are each integrally connected to the mounting surface (20) of the seat portion (12) in a continuous manner at least region-wise.

3. The saddle (10) according to claim 1 or 2, wherein the mounting members (18) are each integrally connected to the mounting surface (20) of the seat portion (12) in a continuous manner along a length of at least 2 cm, preferably at least 3 cm, preferably at least 5 cm, preferably at least 7 cm, more preferably at least 9 cm, most preferably at least 10 cm.

4. The saddle (10) according to any one of the preceding claims, wherein the mounting members (18) are each integrally connected to the mounting surface (20) of the seat portion (12) at a distance of at least 2 cm, preferably at least 2.5 cm, more preferably at least 3 cm, more preferably at least 3.5 cm, more preferably at least 4 cm, more preferably at least 4.5 cm, most preferably at least 5 cm, from a lateral edge (24) of the seat surface (14).

5. The saddle (10) according to any one of the preceding claims, wherein the rail (30) is configured to be slidably received by the counter member of the seat post (105) of the bicycle (100).

6. The saddle (10) according to any one of the preceding claims, wherein the rail (30) is configured at a free distal end (34) of the respective mounting member (18).

7. The saddle (10) according to any one of the preceding claims, wherein the mounting members (18) each extend, at least region-wise, in a plane that is in or parallel to a longitudinal center plane of the saddle (10) and/or a longitudinal center plane of the bicycle (100), when the saddle (10) is operatively mounted on the seat post (105) of the bicycle (100), and/or a longitudinal axis of the seat post (105) of the bicycle (100), when the saddle (10) is operatively mounted on the seat post (105) of the bicycle (100).

8. The saddle (10) according to any one of the preceding claims, wherein the mounting members (18) each:
comprise at least one first portion (40) extending substantially linearly from the mounting surface (20);
and/or
comprise one first portion (40) and at least one second portion (42), wherein the first portion (40) and the second portion (42) extend at an angle from 25° to 155°, preferably from 35° to 145°, more preferably from 45° to 135°, more preferably from 55° to 125°, more preferably from 65° to 115°, most preferably from 75° to 105°, with respect to each other.

9. The saddle (10) according to claim 8, wherein the first portion (40) integrally connects the mounting surface (20) of the seat portion (12) and the second portion (42), and wherein
the second portion (42) extends substantially parallel to the seat surface (14);
and/or
the first portion (40) extends in a plane that extends in or parallel to a longitudinal center plane of the saddle (10) and/or a longitudinal center plane of the bicycle (100), when the saddle (10) is operatively mounted on the seat post (105) of the bicycle (100), and/or a longitudinal axis of the seat post (105) of the bicycle (100), when the saddle (10) is operatively mounted on the seat post (105) of the bicycle (100).

10. The saddle (10) according to any one of the preceding claims, wherein the mounting members (18) are each configured to be closed at least in an area in front of and/or above the seat post (105), with respect to a lateral perspective onto the saddle (10), substantially perpendicular to a direction of travel of the bicycle (100) and/or a longitudinal center plane of the bicycle (100), when the saddle (10) is operatively mounted on the seat post (105) of the bicycle (100) and the bicycle (100) is operatively positioned.

11. The saddle (10) according to any one of the preceding claims, wherein the mounting members (18) are each integrally connected to the mounting surface (20) at an attachment region (26), wherein the attachment regions (26) are spaced apart from each other, preferably by a distance of not more than 12 cm, preferably no more than 11 cm, more preferably no more than 10 cm, more preferably no more than 9 cm, more preferably no more than 8 cm, more preferably no more than 7 cm, most preferably no more than 6 cm.

12. The saddle (10) according to any one of the preceding claims, wherein the mounting members (18) each comprise at least one end (39A, 39B) which is exposed and/or spaced apart from the seat portion, preferably such that the end (39A, 39B) of the respective mounting member (18) can be inserted into a region of the seat post (105), preferably into at least one clamping device of the seat post (105), in order to mount, preferably slidably, the saddle (10) on the seat post (105) of the bicycle (100).

13. A bicycle (100) comprising a seat post (105) and a saddle (10) mounted on the seat post (105) according to any one of the preceding claims.

14. A manufacturing method for manufacturing a saddle (10), in particular according to any one of claims 1 to 12, comprising:
providing at least one material for manufacturing the saddle (10);
manufacturing the saddle (10) such that:
the saddle (10) comprises a seat portion (12) having a seat surface (14) configured to at least partially support a region of a body of a user during operation of the bicycle (100);
the saddle (10) comprises at least one mounting portion (16) having at least two mounting members (18) each configured to be brought into an engaging connection with a region of a seat post (105) of the bicycle (100) in order to mount the saddle (10) on the bicycle (100);
the seat portion (12) and the mounting portion (16) are integrally formed during the manufacturing method, wherein the mounting portion (16) is integrally formed on a mounting surface (20) of the seat portion (12) which is opposite from the seat surface;
wherein the mounting members (18) each comprise at least one rail (30) formed integrally with the respective mounting member (18) and configured to be at least partially received by a counter member of the seat post (105) of the bicycle (100) in order to mount the saddle (10) to the seat post (105) of the bicycle (100); **characterized in that**
the rail (30) is configured as an enlarged portion of the respective mounting member (18), relative to an adjacent portion of the mounting member (18), at one end (34) of the respective mounting member (18).

15. A mounting method for mounting a saddle (10) according to any one of claims 1 to 12 on a seat post (105) of a bicycle (100), comprising:
providing the saddle (10);
positioning the saddle (10) relative to a mounting mechanism on the seat post (105) so that the mounting members (18) of the saddle (10) each get into an engaging connection with the mounting mechanism of the seat post (105); and
securing the mounting members (18) to the mounting mechanism.

## Revendications

1. Selle (10) pour une bicyclette (100), présentant :
une section d'assise (12) avec une surface d'assise (14), qui est mise au point pour recevoir au moins en partie une zone du corps d'un utilisateur lors de l'utilisation de la bicyclette (100) ; et
au moins une section de montage (16) avec au moins deux éléments de montage (18) espacés l'un de l'autre, qui sont mis au point respectivement pour être amené en prise avec une région d'une tige de selle (105) de la bicyclette (100) pour monter la selle (10) sur la bicyclette (100) ;
dans laquelle la section d'assise (12) et la section de montage sont réalisées d'un seul tenant et dans laquelle la section de montage (16) est formée d'un seul tenant sur une surface de montage (20) de la section d'assise (12) opposée à la surface d'assise (14) ;
dans laquelle les éléments de montage (18) présentent respectivement au moins un rail (30) réalisé d'un seul tenant avec l'élément de montage (18) respectif, qui est mis au point pour être reçu au moins en partie par un contre-élément de la tige de selle (105) de la bicyclette (100) pour monter la selle (10) sur la tige de selle (105) de la bicyclette (100) ;
**caractérisée en ce que**
le rail (30) est réalisé comme une section élargie de l'élément de montage (18) respectif par rapport à une section adjacente de l'élément de montage (18), sur une extrémité (34) de l'élément de montage (18) respectif.

2. Selle (10) selon la revendication 1, dans laquelle les éléments de montage (18) sont reliés d'un seul tenant respectivement au moins par endroits en continu à la surface de montage (20) de la section d'assise (12).

3. Selle (10) selon la revendication 1 ou 2, dans laquelle les éléments de montage (18) sont reliés d'un seul tenant en continu à la surface de montage (20) de la section d'assise (12) respectivement le long d'une longueur d'au moins 2 cm, de manière préférée d'au moins 3 cm, de manière préférée d'au moins 5 cm, de manière préférée d'au moins 7 cm, de manière plus préférée d'au moins 9 cm, idéalement d'au moins 10 cm.

4. Selle (10) selon l'une quelconque des revendications précédentes, dans laquelle les éléments de montage (18) sont reliés d'un seul tenant à la surface de montage (20) de la section d'assise (12) respectivement à une distance d'au moins 2 cm, de manière préférée d'au moins 2,5 cm, de manière plus préférée d'au moins 3 cm, de manière plus préférée d'au moins 3,5 cm, de manière plus préférée d'au moins 4 cm, de manière plus préférée d'au moins 4,5 cm, idéalement d'au moins 5 cm, par rapport à un bord latéral (24) de la surface d'assise (14).

5. Selle (10) selon l'une quelconque des revendications précédentes, dans laquelle le rail (30) est mis au point pour être reçu de manière à pouvoir coulisser par le contre-élément de la tige de selle (105) de la bicyclette (100).

6. Selle (10) selon l'une quelconque des revendications précédentes, dans laquelle le rail (30) est réalisé sur une extrémité distale libre (34) de l'élément de montage (18) respectif.

7. Selle (10) selon l'une quelconque des revendications précédentes, dans laquelle les éléments de montage (18) s'étendent respectivement au moins par endroits dans un plan, qui s'étend dans ou de manière parallèle à un plan médian longitudinal de la selle (10) et/ou à un plan médian longitudinal de la bicyclette (100) lorsque la selle (10) est montée selon le fonctionnement prévu sur la tige de selle (105) de la bicyclette (100), et/ou sur un axe longitudinal de la tige de selle (105) de la bicyclette (100) lorsque la selle (10) est montée selon le fonctionnement prévu sur la tige de selle (105) de la bicyclette (100).

8. Selle (10) selon l'une quelconque des revendications précédentes, dans laquelle les éléments de montage (18) présentent respectivement :
au moins une première section (40), qui s'étend sensiblement de manière rectiligne depuis la surface de montage (20) ;
et/ou
présentent une première section (40) et au moins une deuxième section (42), dans laquelle la première section (40) et la deuxième section (42) s'étendent l'une par rapport à l'autre selon un angle de 25° à 155°, de préférence de 35° à 145°, de manière plus préférée de 45° à 135°, de manière plus préférée de 55° à 125°, de manière plus préférée de 65° à 115°, idéalement de 75° à 105°.

9. Selle (10) selon la revendication 8, dans laquelle la première section (40) relie d'un seul tenant la surface de montage (20) de la section d'assise (12) et la deuxième section (42), et dans laquelle
la deuxième section (42) s'étend de manière sensiblement parallèle à la surface d'assise (14) ;
et/ou
la première section (40) s'étend dans un plan, qui s'étend dans ou de manière parallèle à un plan médian longitudinal de la selle (10) et/ou à un plan médian longitudinal de la bicyclette (100) lorsque la selle (10) est montée selon le fonctionnement prévu sur la tige de selle (105) de la bicyclette (100), et/ou sur un axe longitudinal de la tige de selle (105) de la bicyclette (100) lorsque la selle (10) est montée selon le fonctionnement prévu sur la tige de selle (105) de la bicyclette (100).

10. Selle (10) selon l'une quelconque des revendications précédentes, dans laquelle, par rapport à une perspective latérale de la selle (10), sensiblement de manière perpendiculaire à une direction de déplacement de la bicyclette (100) et/ou à un plan médian longitudinal de la bicyclette (100) lorsque la selle (10) est montée selon le fonctionnement prévu sur la tige de selle (105) de la bicyclette (100) et que la bicyclette (100) est positionnée selon le fonctionnement prévu, les éléments de montage (18) sont réalisés respectivement de manière fermée au moins dans une zone située devant et/ou au-dessus de la tige de selle (105).

11. Selle (10) selon l'une quelconque des revendications précédentes, dans laquelle les éléments de montage (18) sont reliés d'un seul tenant respectivement sur une zone de fixation (26) sur la surface de montage (20), dans laquelle les zones de fixation (26) sont espacées les unes des autres, de préférence à une distance de 12 cm au maximum, de préférence de 11 cm au maximum, de manière plus préférée de 10 cm au maximum, de manière plus préférée de 9 cm au maximum, de manière plus préférée de 8 cm au maximum, de manière plus préférée de 7 cm au maximum, idéalement de 6 cm au maximum.

12. Selle (10) selon l'une quelconque des revendications précédentes, dans laquelle les éléments de montage (18) présentent respectivement au moins une extrémité (39A, 39B) qui est réalisée de manière exposée et/ou espacée de la section d'assise, de préférence de telle sorte que l'extrémité (39A, 39B) de l'élément de montage (18) respectif peut être introduite dans une zone de la tige de selle (105), de préférence dans au moins un dispositif de serrage de la tige de selle (105), pour monter, de préférence de manière à pouvoir coulisser, la selle (10) sur la tige de selle (105) de la bicyclette (100).

13. Bicyclette (100) présentant une tige de selle (105) et une selle (10) montée sur la tige de selle (105) selon l'une quelconque des revendications précédentes.

14. Procédé de fabrication destiné à fabriquer une selle (10), en particulier selon l'une quelconque des revendications 1 à 12, présentant :
la fourniture d'au moins un matériau pour fabriquer la selle (10) ;
la fabrication de la selle (10) de telle manière que :
la selle (10) présente une section d'assise (12) avec une surface d'assise (14), qui est mise au point pour recevoir au moins en partie une zone du corps d'un utilisateur lors de l'utilisation de la bicyclette (100) ;
la selle (10) présente au moins une section de montage (16) avec au moins deux éléments de montage (18), qui sont mis au point respectivement pour être amenés en prise avec une zone d'une tige de selle (105) de la bicyclette (100) pour monter la selle (10) sur la bicyclette (100) ;
la section d'assise (12) et la section de montage (16) sont réalisées d'un seul tenant lors du procédé de fabrication, dans lequel la section de montage (16) est formée d'un seul tenant sur une surface de montage (20) de la section d'assise (12) opposée à la surface d'assise ;
les éléments de montage (18) présentent respectivement au moins un rail (30) réalisé d'un seul tenant avec l'élément de montage (18) respectif, qui est mis au point pour être reçu au moins en partie par un contre-élément de la tige de selle (105) de la bicyclette (100) pour monter la selle (10) sur la tige de selle (105) de la bicyclette (100) ;
**caractérisé en ce que**
le rail (30) est réalisé comme une section élargie de l'élément de montage (18) respectif, par rapport à une section adjacente de l'élément de montage (18), sur une extrémité (34) de l'élément de montage (18) respectif.

15. Procédé de montage destiné à monter une selle (10) selon l'une quelconque des revendications 1 à 12 sur une tige de selle (105) d'une bicyclette (100), présentant :
la fourniture de la selle (10) ;
le positionnement de la selle (10) par rapport à un mécanisme de montage sur la tige de selle (105) si bien que les éléments de montage (18) de la selle (10) parviennent en prise respectivement avec le mécanisme de montage de la tige de selle (105) ; et
le blocage des éléments de montage (18) au mécanisme de montage.
